(19) Europäisches Patentamt
European Patent Office
Office européen des brevets

(11) Veröffentlichungsnummer: **0 313 878 B1**

(12) **EUROPÄISCHE PATENTSCHRIFT**

(45) Veröffentlichungstag der Patentschrift: **02.02.94**

(51) Int. Cl.[5]: **C08G 77/62**, C04B 35/58, C04B 35/00

(21) Anmeldenummer: **88116371.1**

(22) Anmeldetag: **04.10.88**

(54) **Polymere Hydridosilazane und Verfahren zu ihrer Herstellung sowie ihre Verwendung.**

(30) Priorität: **06.10.87 DE 3733728**

(43) Veröffentlichungstag der Anmeldung:
**03.05.89 Patentblatt 89/18**

(45) Bekanntmachung des Hinweises auf die Patenterteilung:
**02.02.94 Patentblatt 94/05**

(84) Benannte Vertragsstaaten:
**BE CH DE FR GB IT LI SE**

(56) Entgegenhaltungen:
**EP-A- 0 209 472**
**EP-A- 0 235 486**
**US-A- 4 482 669**
**US-A- 4 535 007**

(73) Patentinhaber: **HOECHST AKTIENGESELLSCHAFT**
**D-65926 Frankfurt(DE)**

(72) Erfinder: **Gerdau, Thomas, Dr.**
**Königsteiner Strasse 17**
**D-6239 Eppstein/Taunus(DE)**
Erfinder: **Kleiner, Hans-Jerg, Dr.**
**Altkönigstrasse 11a**
**D-6242 Kronberg/Taunus(DE)**
Erfinder: **Peuckert, Marcellus, Dr.**
**Platanenweg 8**
**D-6238 Hofheim am Taunus(DE)**
Erfinder: **Brück, Martin**
**Haneckstrasse 17**
**D-6238 Hofheim am Taunus(DE)**
Erfinder: **Aldinger, Fritz, Dr.**
**Barbarossastrasse 44**
**D-6458 Rodenbach(DE)**

EP 0 313 878 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue polymere Hydridosilazane, Verfahren zu ihrer Herstellung sowie ihre Verwendung zur Herstellung von Siliziumnitrid enthaltendem keramischen Material , sowie dieses Material selbst.

Siliziumnitrid ist wegen der hohen Temperaturbeständigkeit, des geringen thermischen Ausdehnungskoeffizienten, der extremen Härte bei geringem Gewicht und der großen Korrosionsbeständigkeit von erheblichem kommerziellen Interesse. Es ist bekannt, daß Siliziumnitrid durch Nitridierung von Silizium mit $N_2$ oder $NH_3$, sowie durch Reaktion von $SiCl_4$ mit $NH_3$ und anschließender Pyrolyse hergestellt werden kann. Reines Siliziumnitrid-Pulver besitzt allerdings keine Sinteraktivität, so daß auf diesem Wege nur sehr einfache Formteile unter großem Aufwand hergestellt werden können. Fasern und Filme lassen sich auf pulvermetallurgischem Weg nur für wenige Anwendungsgebiete fertigen. Es ist aber bekannt, daß durch Gasphasenabscheidung von $SiCl_4$-$NH_3$ oder $SiH_4$-$NH_3$ Schichten aus Siliziumnitrid gebildet werden, die in der Halbleiterindustrie Verwendung finden können.

Fertigungstechnische Vorteile haben jedoch solche Verfahren, bei der die Formgebung auf der Stufe eines präkeramischen Polymers erfolgt. Dies gilt besonders für Oberflächenbeschichtungen und Faserspinnprozesse. Die eigentliche Keramik wird dann erst durch anschließende Pyrolyse des geformten Polymers hergestellt. Als Ausgangsmaterialien für Siliziumnitrid kommen Polysilazane in Frage. Die Pyrolyse von Polysilazanen zu Siliziumnitrid/SiC-haltigem keramischen Material wurde bereits in der Literatur (R.R. Wills et al., Ceramic Bulletin, Vol. 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen umgesetzt (US-PS 4 540 803, US-PS 4 543 344, US-PS 4 595 775, US-PS 4 397 828, US-PS 4 482 669).

EP-A-235 486 beschreibt die umsetzung von Trichlorsilanen mit Oligosilazanen zu Polyhydridochlorsilazanen, die dann mit $NH_3$ zu Polyhydridosilazanen umgesetzt werden. Dichlorsilane werden als ungeeignet für diesen zweck hingestellt. Nach EP-A-209 472 werden Oligosilazane durch bloßes Erhitzen in Polyhydridosilazane umgewandelt.

Die vorliegende Erfindung stellt neue Ausgangsmaterialien für Siliziumnitrid enthaltende keramische Materialien zur Verfügung, nämlich weitgehend chlorfreie polymere Hydridosilazane, im folgenden auch "Polyhydridosilazane" genannt.

Ein Gegenstand der vorliegenden Erfindung ist ein Verfahren zur Herstellung von polymeren Hydridosilazanen gemäß Anspruch 1.

Die dabei als Ausgangsprodukte eingesetzten polymeren Hydridochlorsilazane,im folgenden auch "Polyhydridochlorsilazane" genannt, werden dadurch erhalten, daß man Oligohydridoalkylsilazane der allgemeinen Formel $(R^1SiHNH)_n$ worin n 3 bis 12 ist und $R^1$ eine Alkylgruppe mit 1 bis 6 C-Atomen bedeutet, mit einem Dichlorhydridoalkylsilan der allgemeinen Formel $R^2SiHCl_2$, worin $R^2$ eine Alkylgruppe mit 1 bis 6 C-Atomen bedeutet, bei 30 bis 300 °C umsetzt. Es werden dabei leichtflüchtige Nebenprodukte gebildet. Diese werden während der Reaktion entfernt.

Die als Ausgangsprodukte für die Polyhydridochlorsilazane benötigten oligohydridoalkylsilazane $(R^1SiHNH)_n$ können wiederum dadurch erhalten werden, daß man ein Dichlorhydridoalkylsilan der Formel $R^1SiHCl_2$, wobei $R^1$ die obige Bedeutung hat, mit überschüssigem $NH_3$ in einem Lösungsmittel umsetzt, wie in US-PS 4 482 669 beschrieben (siehe dort insbesondere Spalten 4, 5, 7, 8). Dabei entsteht im allgemeinen ein Gemisch linearer und cyclischer Oligomerer mit verschiedenen Kettenlängen n.

Die Reste $R^1$ und $R^2$ in den Oligohydridoalkylsilazanen $(R^1SiHNH)_n$ (im folgenden auch kurz "Oligosilazane" genannt) bzw. im Dichlorhydridoalkylsilan $R^2SiHCl_2$ (im folgenden auch kurz "Dichloralkylsilan" genannt) können gleich oder verschieden sein, vorzugsweise haben sie 1 bis 3 C-Atome.

Besonders bevorzugt ist es, daß $R^1 = R^2 = CH_3$ ist. Vorzugsweise beträgt das molare Verhältnis der Reaktanten bei der obigen Umsetzung Dichloralkylsilan: $R^1$SiHNH-Einheit des Oligosilazans etwa 0,2 : 1 bis 1,5 : 1, insbesondere 0,3 : 1 bis 1 : 1.

Zur Umsetzung des Reaktanten miteinander werden vorzugsweise die Oligoasilazane vorgelegt und das Dichloralkylsilan zugegeben. Da die Reaktion exotherm ist, wird beim Zusammengeben der Reaktanten vorzugsweise zunächst die Temperatur bei 30 bis 50 °C gehalten. Anschließend erhitzt man auf Temperaturen von 100 bis 300 °C, vorzugsweise auf 120 bis 250 °C.

Die bei der Herstellung der Polyhydridochlorsilazane als Nebenprodukte gebildeten Leichtsieder, wie $RSiHCl_2$, $RSiClH_2$, $RSiCl_3$, HCl, $H_2$, $NH_3$ (wobei $R = R^1$ oder $R^2$ ist), entweichen während der Reaktion teilweise. Nach beendeter Umsetzung werden die restlichen Leichtsieder im allgemeinen durch Anlegen von Vakuum aus dem Reaktionsgefäß entfernt.

Das bei dieser Reaktion ebenfalls entstehende $NH_4Cl$ sublimiert im Verlauf der Reaktion zum größten Teil aus dem Reaktionsgemisch ab. Der eventuell verbliebene Rest des $NH_4Cl$ kann durch Extraktion mit einem inerten organischen Lösungsmittel, wie n-Hexan, Toluol, Ether von dem polymeren Hydridochlorsilazan abgetrennt werden.

Die Reaktionsdauer richtet sich nach der Geschwindigkeit des Aufheizens und der Reaktionstemperatur. Im allgemeinen genügt eine Reaktionszeit von 5 bis 7 Stunden.

Es ist auch möglich, die Polyhydridochlorsilazane in einem organischen Lösungsmittel herzustellen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol oder Ether wie Dibenzylether, Diethylenglykoldiethylether. Bei Verwendung eines Lösungsmittels, in dem das gebildete $NH_4Cl$ unlöslich ist, kann letzteres durch Filtration abgetrennt werden. Die polymeren Hydridochlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Die Herstellung der Polyhydridochlorsilazane kann auch kontinuierlich durchgeführt werden.

Die als Ausgangsprodukte eingesetzten polymeren Hydridochlorsilazane haben eine molekulare Struktur, die durch die Formel

(I) 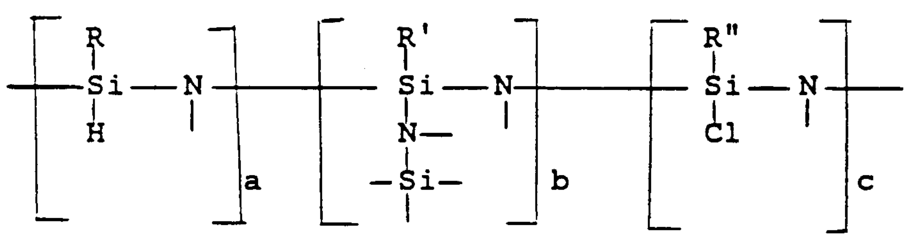

wiedergegeben werden kann, wobei die freien Valenzen an den Stickstoffatomen mit H-Atomen oder Silylresten R*SiXN< (X = H, Cl oder N<) abgesättigt sind. R, R', R'', R* bedeuten dabei Alkylgruppen mit 1 bis 6, vorzugsweise 1 bis 3 C-Atomen, und a, b, c bedeuten die Molfraktionen der jeweiligen Struktureinheiten. Es ist a + b + c = 1. Besonders bevorzugt ist R = R' = R'' = R* = $CH_3$. Die polymeren Hydridochlorsilazane haben eine netzartige Struktur.

Die Werte der Molfraktionen b und c sind umso höher (und entsprechend der Wert von a umso niedriger), je größer das Verhältnis Dichloralkylsilan: $R^1$SiHNH-Einheit des Oligosilazans ist. Die jeweils vorliegenden Werte von a, b, c können durch Integration der $^1$H-NMR-Spektren und durch die Elementaranalyse ermittelt werden. Im allgemeinen liegen die Werte a, b, c, bei 0,1 bis 0,8, wobei a + b + c = 1 ist. Bevorzugt sind solche polymeren Hydridochlorsilazane, bei denen die Werte für a und b bei 0,1 bis 0,5 liegen, insbesondere bei 0,2 bis 0,4. Die bevorzugten Werte für c liegen bei 0,1 bis 0,6, insbesondere bei 0,3 bis 0,6. Diese Werte lassen sich wie gesagt über den relativen Anteil des Dichloralkylsilans im Reaktionsgemisch einstellen und über die genannten Analysenmethoden kontrollieren. Die eben genannten bevorzugten Werte für a, b, c haben sich besonders bewährt, wenn als Endprodukt der Pyrolyse (nach Umwandlung der polymeren Hydridochlorsilazane in Polyhydridosilazane) eine Faser hergestellt werden soll.

Die polymeren Hydridochlorsilazane werden durch Umsetzung mit Ammoniak ("Ammonolyse") in Polyhydridosilazane überführt, die wiederum durch Pyrolyse in Siliziumnitrid enthaltendes keramisches Material umgewandelt werden können.

Die Ammonolyse kann in flüssigem $NH_3$ erfolgen. Es ist jedoch vorteilhaft, sie in einem organischen Lösungsmittel durchzuführen. Geeignet sind alle Lösungsmittel, die sich inert gegenüber den Polyhydridochlorsilazanen verhalten. Bevorzugt sind solche Lösungsmittel, in denen das als Nebenprodukt anfallende Ammoniumchlorid geringe Löslichkeit und gute Abtrennbarkeit aufweist, z.B. Ether, aliphatische und aromatische Kohlenwasserstoffe, chlorierte Kohlenwasserstoff. Die Reaktanten können bei der Ammonolyse in beliebiger Reihenfolge in das Reaktionsgefäß eingespeist werden. Es ist jedoch zumeist vorteilhaft, das Polyhydridochlorsilazan in Lösung vorzulegen und gasförmigen Ammoniak einzuleiten oder flüssigen Ammoniak hinzuzufügen. Die Ammonolyse wird vorzugsweise mit einem Überschuß $NH_3$ durchgeführt, um sicher zu gehen, daß die Reaktion vollständig ist und die Endprodukte möglichst weitgehend chlorfrei sind. Im allgemeinen reicht für diesen Zweck die doppelte stöchiometrische Menge. Wurden die Polyhydridochlorsilazane in einem geeigneten organischen Lösungsmittel hergestellt, so kann man die Ammonolyse ohne vorherige Abtrennung des $NH_4Cl$ in diesem Lösungsmittel durchführen.

Im allgemeinen wird bei einer Temperatur von etwa -50 bis +100 °C gearbeitet, vorzugsweise bei -20 bis +30 °C, insbesondere bei Raumtemperatur (wobei mit Eis gekühlt wird). Es ist jedoch auch möglich, oberhalb Raumtemperatur, z.B. bei der Siedetemperatur des verwendeten Lösungsmittels, oder unterhalb Raumtemperatur, z.B. bei -33 °C bei der Verwendung von flüssigem $NH_3$ zu arbeiten.

Nach beendeter Ammonolyse wird ggf. das überschüssige $NH_3$ entfernt und das angefallene Ammoniumchlorid abfiltriert. Zur Erhöhung der Ausbeute kann der Niederschlag mit einem der obengenannten organischen Lösungsmittel gewaschen werden. Nach Abdestillation des Lösungsmittels bei vermindertem Druck werden die erfindungsgemäßen Polyhydridosilazane unmittelbar als weiße Pulver erhalten. Die Polyhydridosilazane sind in den obigen organischen Lösungsmitteln löslich, so daß diese sowohl für das Beschichten von Oberflächen als auch für die Herstellung von Fasern verwendet werden können.

Bei der Ammonolyse der Polyhydridochlorsilazane der Formel I treten (von den Umsetzungen der Chlorsilane mit $NH_3$ geläufige) Reaktionen der chlorhaltigen Struktureinheit der Polyhydridochlorsilazane ein

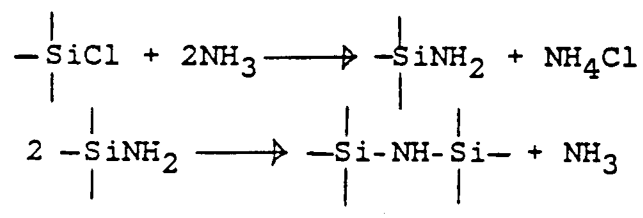

wobei weitgehend chlorfreie Polyhydridosilazane entstehen.

Ein weiterer Gegenstand der Erfindung sind polymere Hydridosilazane, dadurch hergestellt, daß man polymere Hydridochlorsilazane mit $NH_3$ umsetzt, wobei die polymeren Hydridochlorsilazane dadurch erhalten wurden, daß man Oligohydridoalkylsilazane der allgemeinen Formel $(R^1SiHNH)_n$, worin n etwa 3 bis etwa 12 ist und $R^1$ eine Alkylgruppe mit 1 bis 6 C-Atomen bedeutet, mit einem Dichlorhydridoalkylsilan der allgemeinen Formel $R^2SiHCl_2$, worin $R^2$ eine Alkylgruppe mit 1 bis 6 C-Atomen bedeutet, bei 30 bis 300 °C umsetzt. Vorzugsweise sind $R^1$ und $R^2$ Alkylgruppen mit 1 bis 3 C-Atomen, besonders bevorzugt ist $R^1 = R^2 = CH_3$.

Die erhaltenen Polyhydridosilazane haben einen hohen Anteil an N-Atomen, sie können durch Pyrolyse in inerter Stickstoff- oder Argonatmosphäre bei Temperaturen von 800 bis 1200 °C zu amorphen, dichten Materialien pyrolysiert werden, die Siliziumnitrid enthalten und in Spuren auch H und O enthalten können. Bei Pyrolysetemperaturen oberhalb 1200 °C, etwa im Bereich von 1200 °C bis 1400 °C, entstehen teilamorphe, mikrokristalline keramische Werkstoffe, die als kristalline Phase $\alpha$-Siliziumnitrid enthalten.

Ein besonderer Vorteil ist, daß sich die Polyhydridosilazane vor der Pyrolyse nach verschiedenen Verfahren zu dreidimensionalen Formkörpern formen lassen.Ein weiterer Gegenstand der Erfindung ist daher ein Verfahren zur Herstellung von Siliziumnitrid enthaltendem keramischen Material, dadurch gekennzeichnet, daß man polymere Hydridosilazane in inerter Stickstoff- oder Argonatmosphäre bei 800 bis 1400 °C pyrolysiert, wobei die polymeren Hydridosilazane nach einem der beschriebenen Verfahren erhalten worden sind.

Eine wichtige Methode der Formgebung ist das Ziehen von Fasern. Dabei lassen sich Fasern aus hochviskosen Lösungen des Polyhydridosilazans in Lösungsmitteln, wie Toluol, THF oder Hexan ziehen. Das Fasernziehen geschieht vorteilhafterweise mittels Spinndüsen von 80 bis 150 µm Durchmesser. Durch anschließendes Strecken wird der Faden verjüngt, so daß nach der Pyrolyse ein sehr fester Faden von 2 bis 20 µm, insbesondere 5 bis 15 µm Durchmesser entsteht. Anschließend wird der Faden in Luft oder Inertgas getrocknet. Die durch anschließende Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der Polyhydridosilazane ist die Herstellung dichter, gut haftender amorpher oder mikrokristalliner keramischer Beschichtungen auf Metallen, insbesondere Stählen, oder auf Keramiken wie $Al_2O_3$, $ZrO_2$, MgO, SiC oder Siliziumnitrid. Die Beschichtung erfolgt mit Hilfe einer Lösung des Polyhydridosilazans in organischen Lösungsmitteln wie Toluol, THF, Hexan. Die pyrolytische Umwandlung in eine amorphe bzw. mikrokristalline Schicht erfolgt im gleichen Temperaturbereich von 800 bis 1200 °C bzw. 1200 bis 1400 °C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Weiter kann man die oben beschriebenen Polyhydridosilazane mit gleichhoher keramischer Ausbeute von 70 bis 90 % statt in Inertgas auch in $NH_3$-Atmosphäre pyrolysieren. Dabei resultiert ein praktisch kohlenstofffreier, glasklarer, farbloser Werkstoff. Bei der Pyrolyse in $NH_3$ bei 1000 °C oder höher liegt der C-Gehalt unterhalb 0,5 Gew.-%. Das Pyrolyseprodukt besteht je nach Pyrolysetemperatur aus praktisch reinem amorphen Siliziumnitrid (Pyrolyse unterhalb 1200 °C) oder kristallinem Siliziumnitrid (Pyrolyse oberhalb 1250, vorzugsweise oberhalb 1300 °C). Die Pyrolyse in $NH_3$ läßt sich auf alle nach den oben beschriebenen Formgebungsverfahren hergestellten Formkörpern, also aus Polyhydridosilazan-Pulver geformte Körper, Fasern und Beschichtungen anwenden.

**Versuchsbericht:**

**Herstellung von polymerem Hydridochlormethylsilazan**

54,4 g (0,92 Mol) Oligohydridomethylsilazan (hergestellt aus 132 g Methyldichlorsilan und $NH_3$ in THF) wurden bei 28 bis 46 °C mit 88 g (0,77 Mol) Methyldichlorsilan versetzt und im Ölbad innerhalb von 5 h auf 200 °C erhitzt. Nach beendeter Reaktion wurden bei 150 °C und 0,5 bar leichtflüchtige Reaktionsprodukte abgezogen. Der verbliebene Rückstand wurde in 200 ml n-Pentan gelöst, von wenig $NH_4Cl$ abfiltriert und im Vakuum zur Trockene eingeengt. Es verblieben 57,2 g eines löslichen weißen Pulvers, welches aus polymerem Hydridochlormethylsilazan bestand.

**Beispiel 1**

57,2 g des gemäß Versuchsbericht hergestellten polymeren Hydridochlormethylsilazans wurden in 400 ml THF gelöst und bei -5 bis 0 °C $NH_3$ bis zur Sättigung eingeleitet. Nach beendeter Ammonolyse wurde 1 h bei Raumtemperatur gerührt und vom ausgefallenen Ammoniumchlorid abfiltriert. Anschließend wurde das Lösungsmittel und überschüssiges $NH_3$ um Vakuum abgezogen. Zurück blieben 52,0 g eines weißen, in organischen Lösungsmitteln löslichen Pulvers der chemischen Zusammensetzung $C_1H_4N_{1,17}Si_1$
Elementaranalyse (Gew.-%): 25,8 % N; 44 % Si; unter 0,3 % Cl Molmasse: 2700 g/mol, osmometrisch in Benzol

$^1$H-NMR: (100 MHz,$CDCl_3$,ppm): $\delta$ 0,05-0,6 (br,3H,$SiCH_3$), 0,7-1,4 (br,0,6H,NH), 4,3-4,5 (br) und 4,6-5,0 (br,0,38H,SiH).

IR: (KBr,$cm^{-1}$) 3480 (w), 3400 (m), 2960 (sh,m), 2140 (br,m), 1410 (w), 1260 (sh,s) 1150 (br,m), 1050-960 (br,s), 900 (vs), 755 (br,m).

**Beispiel 2**

Polyhydridomethylsilazan wurde direkt aus Oligohydridomethylsilazan $(CH_3SiNNH)_n$ hergestellt, ohne das intermediär entstehende Polyhydridochlormethylsilazan zu isolieren:
9,56 g (162 mMol) Oligohydridomethylsilazan und 15,6 g (135 mMol) Dichlormethylsilan wurden unter Rückfluß 4 h bei 235 °C Ölbadtemperatur erhitzt. Anschließend wurden die Leichtsieder bei 80 °C im Vakuum abgezogen und der Rückstand in 50 ml THF gelöst. Bei -5 bis 0 °C wurde $NH_3$ eingeleitet und nach beendeter Reaktion vom $NH_4Cl$ abfiltriert. Nach Abziehen des Lösungsmittels verblieben 7,1 g eines weißen Pulvers, welches aus Polyhydridomethylsilazan bestand.

Elementaranalyse (Gew.-%): 42 % Si; 21.7 % N; 0,6 % Cl

**Beispiel 3**

Das in Beispiel 1 hergestellte Polyhydridomethylsilazan wurde in Argon-Atmosphäre in 4 h auf 1000 °C aufgeheizt und 1 h bei 1000 °C pyrolysiert. Man erhielt mit 85 Gew.-% Ausbeute, bezogen auf das Ausgangsmaterial, ein röntgenamorphes keramisches Material mit 22,2 Gew.-% N, 4,1 Gew.-% C, 8,5 Gew.-% O.

### Beispiel 4

Das in Beispiel 1 hergestellte Polyhydridomethylsilazan wurde in Toluol gelöst, so daß eine hochviskose, konzentrierte Lösung entstand. Mit Hilfe eines Glasstabes wurden aus dieser Lösung Fasern gezogen, die nach dem Trocknen in Argon bei 1000 °C 1 h in Argon-Atmosphäre pyrolysiert wurden. Man erhielt dadurch röntgenamorphe porenfreie Fasern von 20 µm Durchmesser.

### Patentansprüche

1. Verfahren zur Herstellung von polymeren Hydridosilazanen, dadurch gekennzeichnet, daß man polymere Hydridochlorsilazane mit $NH_3$ umsetzt, wobei die polymeren Hydridochlorsilazane dadurch erhalten wurden, daß man Oligohydridoalkylsilazane der allgemeinen Formel $(R^1SiHNH)_n$ worin n 3 bis 12 ist und $R^1$ eine Alkylgruppe mit 1 bis 6 C-Atomen bedeutet, mit einem Dichlorhydridoalkylsilan der allgemeinen Formel $R^2SiHCl_2$,worin $R^2$ eine Alkylgruppe mit 1 bis 6 C-Atomen bedeutet, bei 30 bis 300 °C umsetzt.

2. Verfahren nach Anspruch 3, dadurch gekennzeichnet, daß $R^1 = R^2 = CH_3$ ist.

3. Polymere Hydridosilazane, erhältlich nach dem Verfahren gemäß Anspruch 1.

4. Polymere Hydridosilazane, erhältlich nach dem Verfahren gemäß Anspruch 2.

### Claims

1. A process for the preparation of a polymeric hydridosilazane, which comprises reacting a polymeric hydridochlorosilazane with $NH_3$, the polymeric hydridochlorosilazane being obtained by reacting an oligohydridoalkylsilazane of the formula $(R^1SiHNH)_n$, in which n is 3 to 12 and $R^1$ denotes an alkyl group having 1 to 6 carbon atoms, with a dichlorohydridoalkylsilane of the formula $R^2SiHCl_2$, in which $R^2$ denotes an alkyl group having 1 to 6 carbon atoms, at 30 to 300 °C.

2. The process as claimed in claim 1, wherein $R^1 = R^2 = CH_3$.

3. A polymeric hydridosilazane, obtainable by the process as claimed in claim 1.

4. A polymeric hydridosilazane, obtainable by the process as claimed in claim 2.

### Revendications

1. Procédé de préparation d'hydridosilazanes polymères, caractérisé en ce qu'on fait réagir des hydridochlorosilazanes polymères avec $NH_3$, les hydridochlorosilazanes polymères ayant été obtenus en faisant réagir à 30 à 300 °C des oligohydridoalkylsilazanes répondant à la formule générale $(R^1SiHNH)_n$, dans laquelle n est un nombre de 3 à 12 et $R^1$ est un groupe alkyle en $C_1$-$C_6$, avec un dichlorhydridoalkylsilane répondant à la formule générale $R^2SiHCl_2$, dans laquelle $R^2$ désigne un groupe alkyle en $C_1$-$C_6$.

2. Procédé selon la revendication 1, caractérisé en ce que $R^1 = R^2 = CH_3$.

3. Hydridosilazanes polymères, pouvant être obtenus par le procédé selon la revendication 1.

4. Hydridosilazanes polymères, pouvant être obtenus par le procédé selon la revendication 2.